# EUROPEAN PATENT APPLICATION

(11) **EP 4 414 410 A1**
(43) Date of publication of application: **14.08.2024**
(21) Application number: 22878305.6
(22) Date of filing: 16.09.2022
(51) Int. Cl.: C08G 77/16, C08G 77/38

(54) **HYDROXYALKYL GROUP-CONTAINING POLYSILOXANE AND METHOD FOR PRODUCING SAME**

(30) Priority: 04.10.2021 JP 2021163555
(71) Applicant: SHIN-ETSU CHEMICAL CO., LTD., Tokyo 1000005 (JP)
(72) Inventor: ANDO, Yuji, Annaka-shi, Gunma 379-0224 (JP); SAKUTA, Koji, Annaka-shi, Gunma 379-0224 (JP); MEGURIYA, Noriyuki, Annaka-shi, Gunma 379-0224 (JP)
(74) Representative: Mewburn Ellis LLP
(86) International application number: PCT/JP2022/034687
(87) International publication number: WO 2023/058434

(57) **Abstract**

This hydroxyalkyl group-containing polysiloxane represented by formula (1) has a high thermal resistance and produces few dehydrogenation reactants generated from OH groups and SiH groups of a raw material compound.

(R¹₃SiO_{1/2})ₖ(R¹₂SiO_{2/2})ₚ(R¹SiO_{3/2})_{q}(SiO_{4/2})ᵣ (1)

[R¹ is a group, etc., selected from formulas (2)-(5):

-CH₂-CH₂-Y-OH, etc. (2)

-O-Y-CH=CH₂ (3)

-O-Y'-CH=CH-CH₃ (4)

-O-Y-CH₂-CH₂-* (5)

(Y and Y' represent a divalent hydrocarbon group; * indicates a bonding point with an Si atom in another siloxane.)
When the numbers of formulas (2)-(5) are noted as n2-n5, n2 > 0, n3 ≥ 0, n4 ≥ 0, n5 ≥ 0, n2+n3+n4+n5 ≥ 1, and 0.97 < n2/(n2+n3+n4+n5) ≤ 1.0 are satisfied, and also k > 0, p ≥ 0, q ≥ 0, r ≥ 0, and k+p+q ≥ 2 are satisfied.]

## Description

### TECHNICAL FIELD

The present invention relates to a hydroxyalkyl group-containing polysiloxane and a method for preparing the same.

### BACKGROUND ART

Hydroxyalkyl group-containing polysiloxanes are used in various applications such as paint additives, cosmetics and resin modifiers. In the case of resin modifiers, the use of a hydroxyalkyl group-containing polysiloxane when synthesizing, for example, a polyurethane resin makes it possible to impart the heat resistance, cold resistance, water resistance, chemical resistance, electrical properties and gas permeability characteristic of siloxanes.

Patent Document 1 discloses a hydroxyalkyl group-containing polysiloxane that can be obtained by a hydrosilylation reaction between an allyl glycol and a hydrogensiloxane.

However, in the hydrosilylation reaction between an allyl glycol and a hydrogensiloxane described in Patent Document 1, the compatibility between the allyl glycol and the hydrogensiloxane is poor. As a result, in the course of the reaction, apart from the hydrosilylation that is the main reaction, impurities sometimes form due to side reactions involving dehydrogenation between the hydroxyl groups on the allyl glycol and the hydrosilyl groups on the hydrogensiloxane. Moreover, the resulting hydroxy group-containing polysiloxane contains ether groups and sometimes has a poor heat resistance.

Accordingly, there is a strong desire for a hydroxyalkyl group-containing polysiloxane which contains little product of dehydrogenation reactions between hydroxyl groups and hydrosilyl groups on the starting compounds and which has a high heat resistance.

### PRIOR ART DOCUMENTS

### PATENT DOCUMENTS

Patent Document 1: JP-A 2014-224060

### SUMMARY OF INVENTION

### TECHNICAL PROBLEM

In light of the above, the object of the present invention is to provide a hydroxyalkyl group-containing polysiloxane which contains little product of dehydrogenation reactions between hydroxyl groups and hydrosilyl groups on the starting compounds and which has a high heat resistance.

### SOLUTION TO PROBLEM

The inventors have conducted intensive investigations in order to achieve the above objects. As a result, they have discovered that the hydroxyalkyl group-containing polysiloxane described below contains little product of dehydrogenation reactions between hydroxyl groups and hydrosilyl groups on the starting compounds and has a high heat resistance. This discovery ultimately led to the present invention.

Accordingly, the invention provides:
1. A hydroxyalkyl group-containing polysiloxane of formula (1) below

   (R¹₃SiO_{1/2})ₖ(R¹₂SiO_{2/2})ₚ(R¹SiO_{3/2})_{q}(SiO_{4/2})ᵣ (1)

   [wherein each R¹ is independently a group selected from monovalent hydrocarbon groups of 1 to 20 carbon atoms and groups of formulas (2) to (5) below

   -CH₂-CH₂-Y-OH or -CH₂-CH₂-Y-O-_{*} (2)

   -O-Y-CH=CH₂ (3)

   -O-Y'-CH=CH-CH₃ (4)

   -O-Y-CH₂-CH₂-_{*} (5)

   (wherein Y is a divalent hydrocarbon group of 3 to 20 carbon atoms, Y' is a divalent hydrocarbon group of 2 to 19 carbon atoms, and an asterisk _{*} indicates a point of attachment directly to a silicon atom on a separate hydroxyalkyl group-containing polysiloxane molecule);
   letting n2 be the number of groups of formula (2), n3 be the number of groups of formula (3), n4 be the number of groups of formula (4) and n5 be the number of groups of formula (5), n2 > 0, n3 ≥ 0, n4 ≥ 0, n5 ≥ 0, n2+n3+n4+n5 ≥ 1 and 0.97 < n2/(n2+n3+n4+n5) ≤ 1.0;
   k, p, q and r are each numbers such that k > 0, p ≥ 0, q ≥ 0 and r ≥ 0, with the proviso that k+p+q ≥ 2; and
   the respective siloxane units shown in parentheses above are bonded in any order];
2. The hydroxyalkyl group-containing polysiloxane of 1 above, wherein r in formula (1) is 0;
3. The hydroxyalkyl group-containing polysiloxane of 2 above which is a hydroxyalkyl group-containing polysiloxane of formula (6) below

   (R¹₃SiO_{1/2})ₖ(R²₂SiO_{2/2})ₚ(R²SiO_{3/2})_{q} (6)

   (wherein each R² is independently a monovalent hydrocarbon group of 1 to 20 carbon atoms, and R¹, k, p and q are the same as above); and
4. A method for preparing the hydroxyalkyl group-containing polysiloxane of any one of 1 to 3 above, which method includes the step of carrying out a hydrosilylation reaction between an organohydrogenpolysiloxane of formula (7) below

   (R³₃SiO_{1/2})ₖ(R³₂SiO_{2/2})ₚ(R³SiO_{3/2})_{q}(SiO_{4/2})ᵣ (7)

   (wherein each R³ is independently a hydrogen atom or a monovalent hydrocarbon group of 1 to 20 carbon atoms, with the proviso that one or more R³ is a hydrogen atom; and k, p and q are the same as above) and an alkenyl alcohol of formula (9) below

   CH₂=CH-Y-OH (9)

   (wherein Y is the same as above) in the presence of a catalyst.

### ADVANTAGEOUS EFFECTS OF INVENTION

The hydroxyalkyl group-containing polysiloxane of the invention contains less product of dehydrogenation reactions between hydroxyl groups and hydrosilyl groups on the starting compounds, and has a higher heat resistance, than conventional hydroxyalkyl group-containing polysiloxanes.

### DESCRIPTION OF EMBODIMENTS

The invention is described in detail below.

### [Hydroxyalkyl Group-Containing Polysiloxane]

The hydroxyalkyl group-containing polysiloxane of the invention is represented by formula (1) below.

(R¹₃SiO_{1/2})ₖ(R¹₂SiO_{2/2})ₚ(R¹SiO_{3/2})_{q}(SiO_{4/2})ᵣ (1)

In formula (1), each R¹ is independently a group selected from monovalent hydrocarbon groups of 1 to 20 carbon atoms and groups of formulas (2) to (5) below.

-CH₂-CH₂-Y-OH or -CH₂-CH₂-Y-O-_{*} (2)

-O-Y-CH=CH₂ (3)

-O-Y'-CH=CH-CH₃ (4)

-O-Y-CH₂-CH₂-_{*} (5)

The monovalent hydrocarbon group of 1 to 20 carbon atoms represented by R¹ may be linear, branched or cyclic and is exemplified by alkyl groups of 1 to 20, preferably 1 to 10, carbon atoms; cycloalkyl groups of 3 to 20, preferably 4 to 10, carbon atoms; alkenyl groups of 2 to 20, preferably 2 to 10, carbon atoms; aryl groups of 6 to 20, preferably 6 to 10, carbon atoms; and aralkyl groups of 7 to 20, preferably 8 to 10, carbon atoms.

Specific examples of the monovalent hydrocarbon groups of R¹ include alkyl groups such as methyl, ethyl, propyl, butyl, pentyl, hexyl, heptyl, octyl, nonyl, decyl, dodecyl, tetradecyl, hexadecyl and octadecyl groups; cycloalkyl groups such as cyclopentyl and cyclohexyl groups; alkenyl groups such as vinyl and allyl groups; aryl groups such as phenyl, tolyl and naphthyl groups; and aralkyl groups such as benzyl and phenethyl groups.

The monovalent hydrocarbon group of R¹ is more preferably an alkyl group of 1 to 6 carbon atoms or an aryl group of 6 to 8 carbon atoms, and is even more preferably a methyl, ethyl, propyl, butyl or phenyl group.

In formulas (2), (3) and (5), Y is a divalent hydrocarbon group of 3 to 20 carbon atoms.

The divalent hydrocarbon group of 3 to 20 carbon atoms represented by Y may be linear, branched or cyclic; is exemplified by alkylene groups of 3 to 20, preferably 3 to 19, carbon atoms, cycloalkylene groups of 3 to 20, preferably 4 to 10, carbon atoms, alkenylene groups of 3 to 20, preferably 4 to 10, carbon atoms, arylene groups of 6 to 20, preferably 6 to 10, carbon atoms, and aralkylene groups of 7 to 20, preferably 8 to 10, carbon atoms; and preferably does not contain an ether bond.

Specific examples of the divalent hydrocarbon group represented by Y include alkylene groups such as trimethylene, propylene, tetramethylene, pentamethylene, hexamethylene, heptamethylene, octamethylene, nonamethylene, decamethylene, dodecamethylene, tetradecamethylene, hexadecamethylene, octadecamethylene, nonadecamethylene and eicosadecylene groups; cycloalkylene groups such as cyclopentylene and cyclohexylene groups; alkenylene groups such as propenylene group; arylene groups such as phenylene, methylphenylene and naphthylene groups; and aralkylene groups such as benzylene and phenethylene groups.

The divalent hydrocarbon group of Y is preferably an alkylene group of 3 to 18 carbon atoms; more preferably a trimethylene, propylene, tetramethylene, pentamethylene, hexamethylene, heptamethylene, octamethylene, nonamethylene or decamethylene group; even more preferably a trimethylene, propylene, tetramethylene, hexamethylene, octamethylene or nonamethylene group; still more preferably a trimethylene, hexamethylene or nonamethylene group; and most preferably a hexamethylene or nonamethylene group. When the number of carbon atoms is less than 3 or more than 20, the products of dehydrogenation reactions between hydroxyl groups and hydrosilyl groups on the starting compounds increase.

In formula (4), Y' is a divalent hydrocarbon group of 2 to 19 carbon atoms.

The divalent hydrocarbon group of 2 to 19 carbon atoms represented by Y' may be linear, branched or cyclic; is exemplified by alkylene groups of 2 to 19, preferably 2 to 18, carbon atoms, cycloalkylene groups of 3 to 19, preferably 4 to 10, carbon atoms, alkenylene groups of 2 to 19, preferably 2 to 10, carbon atoms, arylene groups of 6 to 19, preferably 6 to 10, carbon atoms, and aralkylene groups of 7 to 19, preferably 8 to 10, carbon atoms; and preferably does not contain an ether bond.

Specific examples of the divalent hydrocarbon group represented by Y' include the same groups as those mentioned as examples of the group of 3 to 19 carbon atoms represented by Y. An example of an alkylene group is the ethylene group. An example of an alkenylene group is the vinylene group.

The divalent hydrocarbon group represented by Y' is preferably an alkylene group of 2 to 17 carbon atoms; more preferably an ethylene, trimethylene, propylene, tetramethylene, pentamethylene, hexamethylene, heptamethylene, octamethylene or nonamethylene group; even more preferably an ethylene, trimethylene, propylene, pentamethylene, hexamethylene or octamethylene group; still more preferably a trimethylene, pentamethylene or octamethylene group; and most preferably a pentamethylene or octamethylene group.

Of these, R¹ is preferably an alkyl group of 1 to 4 carbon atoms, an aryl group of 6 to 8 carbon atoms or groups of formulas (2) to (5); more preferably methyl, ethyl, propyl, butyl, phenyl or groups of formulas (2) to (5); even more preferably methyl, butyl, phenyl or groups of formulas (2) to (5); and most preferably a methyl group, a phenyl group or groups of formulas (2) to (5).

In the hydroxyalkyl group-containing polysiloxane of formula (1), letting n2 be the number of groups of formula (2), n3 be the number of groups of formula (3), n4 be the number of groups of formula (4) and n5 be the number of groups of formula (5), n2 > 0, n3 ≥ 0, n4 ≥ 0, n5 ≥ 0 and n2+n3+n4+n5 ≥ 1.

Moreover, 0.97 < n2/(n2+n3+n4+n5) ≤ 1.0. At n2/(n2+n3+n4+n5) ≤ 0.97, there are few hydroxyalkyl groups. Particularly in applications where hydroxyalkyl groups are reacted and used, the number of reaction sites decreases, making it difficult to obtain a satisfactory performance. For this reason, the lower limit value is preferably 0.98 ≤ n2/(n2+n3+n4+n5), and more preferably 0.99 ≤ n2/(n2+n3+n4+n5). The value of n2/(n2+n3+n4+n5) is determined by ²⁹Si-NMR spectroscopy.

In formula (1), k, p, q and r are each independently numbers such that k > 0, p ≥ 0, q ≥ 0 and r ≥ 0, with the proviso that k+p+q ≥ 2.

The letter 'k' is preferably a number from 2 to 5, more preferably a number from 2 to 4, and even more preferably 2 or 3.

The letter 'p' is preferably a number from 2 to 100, more preferably a number from 3 to 50, and even more preferably a number from 3 to 20.

The letter 'q' is preferably a number from 0 to 3, more preferably a number from 0 to 2, and even more preferably 0 or 1.

The letter 'r' is preferably a number from 0 to 3, more preferably a number from 0 to 2, and even more preferably 0 or 1; r is most preferably 0.

The bonding order of the respective siloxane units shown in parentheses above is not particularly limited; these siloxane units may be randomly bonded or may form block structures.

The weight-average molecular weight of the hydroxyalkyl group-containing polysiloxane of the invention is preferably from 300 to 20,000, more preferably from 300 to 15,000, even more preferably from 400 to 8,000, still more preferably from 500 to 4,000, and most preferably from 600 to 1,500. This weight-average molecular weight is the polystyrene equivalent value obtained by gel permeation chromatography (GPC) measured under the following conditions.

### [Measurement Conditions]

| | |
|---|---|
| Developing solvent: | tetrahydrofuran (THF) |
| Flow rate: | 0.6 mL/min |
| Detector: | differential refractive index detector (RI) |
| Columns: | TSK Guardcolumn SuperH-H |
| | TSKgel SuperHM-N (6.0mm I.D. × 15cm × 1) |
| | TSKgel SuperH2500 (6.0mm I.D. × 15cm × 1) |
| | (all available from Tosoh Corp.) |
| Column temperature: | 40°C |
| Amount of sample injected: | 50 µL (THF solution having concentration 0.3 wt%) |

The hydroxyalkyl group-containing polysiloxane of formula (1) has a molecular structure that is linear, branched, cyclic or a three-dimensional network. A linear or branched siloxane is especially preferred. Such a linear or branched siloxane is preferably one of formula (6) below.

(R¹₃SiO_{1/2})ₖ(R²₂SiO_{2/2})ₚ(R²SiO_{3/2})_{q} (6)

In formula (6), each R² is independently a monovalent hydrocarbon group of 1 to 20 carbon atoms.

Specific examples of the monovalent hydrocarbon group represented by R² include the same groups mentioned above as examples of R¹. Of these, R² is preferably an alkyl group of 1 to 6 carbon atoms or an aryl group of 6 to 8 carbon atoms; more preferably a methyl, ethyl, propyl, butyl or phenyl group; even more preferably a methyl, butyl or phenyl group; and most preferably a methyl or phenyl group.

In formula (6), R¹, k, p and q are the same as above.

### [Method of Preparation]

The inventive hydroxyalkyl group-containing polysiloxane of formula (1) above can be obtained by, for example, carrying out a hydrosilylation reaction between an organohydrogenpolysiloxane and an alkenyl alcohol. In the present invention, by using as a starting material an alkenyl alcohol having a specific alkyl chain length with respect to the organohydrogenpolysiloxane, the hydrosilylation reaction proceeds selectively, enabling a hydroxyalkyl group-containing polysiloxane to be obtained which contains little product of dehydrogenation reactions between hydroxyl groups on the alkenyl alcohol and hydrosilyl groups on the organohydrogenpolysiloxane.

### (a) Organohydrogenpolysiloxane

The organohydrogenpolysiloxane is preferably a compound of formula (7) below.

(R³₃SiO_{1/2})ₖ(R³₂SiO_{2/2})ₚ(R³SiO_{3/2})_{q}(SiO_{4/2})ᵣ (7)

In formula (7), each R³ is independently a hydrogen atom or a monovalent hydrocarbon group of 1 to 20 carbon atoms, provided that one or more R³ is a hydrogen atom, and preferably two or more are hydrogen atoms.

Specific examples of the monovalent hydrocarbon group represented by R³ include the same groups as mentioned above in connection with R¹. R³ is preferably a hydrogen atom, an alkyl group of 1 to 6 carbon atoms, or an aryl group of 6 to 8 carbon atoms; more preferably a hydrogen atom or a methyl, ethyl, propyl, butyl or phenyl group; even more preferably a hydrogen atom or a methyl, butyl or phenyl group; and most preferably a hydrogen atom, a methyl group or a phenyl group.

In formula (7), k, p, q and r are the same as above.

The organohydrogenpolysiloxane is more preferably a compound of formula (8) below

(R³₃SiO_{1/2})ₖ(R²₂SiO_{2/2})ₚ(R²SiO_{3/2})_{q} (8)

(wherein R², R³, k, p and q are the same as above).

Specific examples of organohydrogenpolysiloxanes of formula (7) above include dimethylpolysiloxanes capped at both ends of the molecular chain with dimethylhydrogensiloxy groups, methylhydrogenpolysiloxanes capped at both ends of the molecular chain with dimethylhydrogensiloxy groups, methylhydrogensiloxane/dimethylsiloxane copolymers capped at both ends of the molecular chain with dimethylhydrogensiloxy groups, methylhydrogensiloxane/diphenylsiloxane copolymers capped at both ends of the molecular chain with dimethylhydrogensiloxy groups, methylhydrogensiloxane/dimethylsiloxane/diphenylsiloxane copolymers capped at both ends of the molecular chain with dimethylhydrogensiloxy groups, copolymers comprising (CH₃)₃SiO_{1/2} units, (CH₃)₂HSiO_{1/2} units, (CH₃)₂SiO units and CH₃SiO_{3/2} units, copolymers comprising (CH₃)₂HSiO_{1/2} units, (CH₃)₂SiO units and CH₃SiO_{3/2} units, copolymers comprising (CH₃)₂HSiO_{1/2} units, (C₆H₅)₂SiO units, (CH₃)₂SiO units and CH₃SiO_{3/2} units, copolymers comprising (CH₃)(C₆H₅)HSiO_{1/2} units, (CH₃)₂SiO units and CH₃SiO_{3/2} units, and copolymers comprising (CH₃)₂HSiO_{1/2} units, (CH₃)₂SiO units and C₆H₅SiO_{3/2} units. One of these may be used alone or two or more may be used together.

### (b) Alkenyl Alcohol

The alkenyl alcohol is preferably, for example, a compound of formula (9) below

CH₂=CH-Y-OH (9)

(wherein Y is the same as above).

Specific examples of the alkenyl alcohol of formula (9) include 4-penten-1-ol, 5-hexen-1-ol, 6-hepten-1-ol, 7-octen-1-ol, 8-nonen-1-ol, 9-decen-1-ol, 10-undecen-1-ol, 11-dodecen-1-ol, 13-tetradecen-1-ol, 15-hexadecen-1-ol, 17-octadecen-1-ol, 19-eicosen-1-ol, 21-docosen-1-ol, 2-methyl-3-buten-1-ol, 3-methyl-4-penten-1-ol and 3-methyl-5-hexen-1-ol. One of these may be used alone or two or more may be used together.

Of these, 4-penten-1-ol, 7-octen-1-ol and 10-undecen-1-ol are preferred.

The amount of alkenyl alcohol furnished to the reaction is preferably such that the total number of alkenyl groups exceeds the number of hydrosilyl groups on the organohydrogenpolysiloxane. For example, the total number of alkenyl groups per hydrosilyl group is typically from 1 to 5, preferably from 1 to 2, and most preferably from 1 to 1.5. At less than 1, the number of alkenyl groups is inadequate, sometimes giving rise to dehydrogenation and an increase in dehydrogenation reaction products. On the other hand, at more than 5, most of the alkenyl alcohol remains in the reaction system, which may be uneconomical.

The hydrosilylation addition reaction is preferably carried out in the presence of a catalyst. The catalyst is not particularly limited; an addition reaction catalyst known to the art may be used.

Specific examples of catalysts include uncombined platinum group metals such as platinum (including platinum black), palladium, rhodium and ruthenium, and metal catalysts containing these platinum group metals and gold, nickel or the like. Of these, a catalyst containing platinum, palladium or rhodium is preferred.

Specific examples of catalysts containing platinum, palladium or rhodium include PtCl₄, H₂PtCl₆·6H₂O, Pt-ether complexes, Pt-olefin complexes, PdCl₂(PPh₃)₂, PdCl₂(PhCN)₂, RhCl₂(PPh₃)₃ (in the formulas, Ph stands for a phenyl group), and complexes of platinum chloride, chloroplatinic acid or a salt of chloroplatinic acid with a vinyl group-containing siloxane. One of these catalysts may be used alone, or mixtures of two or more may be used.

If necessary, these catalysts may be used after dilution with a solvent such as an alcohol, an aromatic, a hydrocarbon, a ketone or a basic solvent.

Of these, a platinum-containing catalyst is more preferred, complexes of platinum chloride, chloroplatinic acid or a salt of chloroplatinic acid with a vinyl group-containing siloxane are even more preferred, and complexes of chloroplatinic acid with a vinyl group-containing siloxane are still more preferred. A complex of 1,1,3,3-tetramethyl-1,3-divinyldisiloxane with a sodium bicarbonate-neutralized chloroplatinic acid (Karstedt catalyst) is most preferred as the addition reaction catalyst.

The amount of catalyst is not particularly limited, so long as it is a catalytic amount. A catalytic amount is an amount sufficient to cause the addition reaction to proceed. For example, the amount of the above metal catalyst, in terms of the main metal therein, per 100 parts by weight of the organohydrogenpolysiloxane is preferably 0.02 part by weight or less, more preferably from 0.00001 to 0.02 part by weight, even more preferably from 0.0001 to 0.01 part by weight, and most preferably from 0.0003 to 0.005 part by weight.

The total amount of catalyst may be added at the start of the reaction, or it may be added in divided amounts during the course of the reaction. The reaction can be made to proceed even with a small amount of catalyst. However, when the amount of catalyst is too small, the reaction rate may become too slow. Hence, the amount is preferably at or greater than the lower limit value mentioned above. The reaction rate does not particularly improve when the amount of catalyst is excessive, and so an excessive amount of catalyst may not be cost-effective.

When much residual metal catalyst is included in the resulting hydroxy group-containing siloxane, this causes discoloration. Hence, it is preferable for the amount of residual metal catalyst to be low. In the preparation method of the invention, the amount of metal catalyst included in the resulting hydroxy group-containing siloxane, expressed in terms of the amount of atoms of the main metal per 100 parts by weight of the siloxane, may be set to preferably 0.02 part by weight or less, more preferably 0.01 part by weight or less, and even more preferably 0.005 part by weight or less.

Following completion of the addition reaction, residual metal catalyst may be adsorbed and removed by means of, for example, activated carbon.

If necessary, a solvent may be used in the hydrosilylation addition reaction. The solvent may be any that does not hinder the reaction. Examples of solvents that may be used include toluene, xylene, benzene, hexane, cyclohexane, methylcyclohexane, ethylcyclohexane, chloroform, dichloromethane, carbon tetrachloride, tetrahydrofuran (THF), diethyl ether, acetone, methyl ethyl ketone, dimethyl formamide (DMF), acetonitrile, methanol, ethanol, 1-propanol, 2-propanol, 1-butanol and 2-butanol. The solvent may or may not be removed by distillation following completion of the addition reaction.

The addition reaction temperature is preferably between 20°C and 250°C, more preferably between 40°C and 180°C, and even more preferably between 80°C and 120°C. The reaction time is preferably at least one hour, more preferably up to 20 hours, even more preferably up to 12 hours, and still more preferably up to 8 hours.

The hydroxyalkyl group-containing polysiloxane of the invention is useful, for example, in the synthesis of polyester resins and urethane resins, as a paint additive, and in cosmetics.

### EXAMPLES

Examples of the invention and Comparative Examples are given below by way of illustration, although the invention is not limited by these Examples. In the Examples below, ²⁹Si-NMR spectroscopy was performed with the ECX-500II spectrometer (JEOL, Ltd.) and using heavy chloroform as the measurement solvent. In these Examples, Me stands for a methyl group.

### [Example 1]

7-Octen-1-ol, 298.28 parts by weight, and 0.5 part by weight of a toluene solution of a sodium bicarbonate-neutralized chloroplatinic acid/vinyl siloxane complex (platinum content, 0.5 wt%) were added to 500 parts by weight of an organohydrogenpolysiloxane of the formula H-(Me₂SiO)₉-SiMe₂H, and the system was stirred under heating at 100°C for 6 hours. Impurities were subsequently removed at 140°C and 2 mmHg, 3.95 parts by weight of activated carbon was added and the system was stirred at 20°C for 1 hour, following which the activated carbon was filtered off with a filter (NA-500, from Advantec Co., Ltd.), giving the product.

The resulting product was analyzed by ²⁹Si-NMR spectroscopy, yielding the following results: n2 > 0, n3 ≥ 0, n4 ≥ 0, n5 ≥ 0, n2+n3+n4+n5 ≥ 1 and n2/(n2+n3+n4+n5) = 0.995.

In addition, 2 g of the product was weighed out into a 50 mL beaker, and the percent change in the weight-average molecular weight when heated in air at 120°C for one week was found to be 257%. The residual ratio, as calculated from the amount of product remaining in the beaker, was 92%.

### [Example 2]

4-Penten-1-ol, 65.41 parts by weight, and 0.18 part by weight of a toluene solution of a sodium bicarbonate-neutralized chloroplatinic acid/vinyl siloxane complex (platinum content, 0.5 wt%) were added to 180 parts by weight of an organohydrogenpolysiloxane of the formula H-(Me₂SiO)₉-SiMe₂H, and the system was stirred under heating at 100°C for 4 hours. Impurities were subsequently removed at 120°C and 1 mmHg, 0.9 part by weight of activated carbon was added and the system was stirred at 20°C for 1 hour, following which the activated carbon was filtered off with a filter (NA-500, from Advantec Co., Ltd.), giving the product.

The resulting product was analyzed by ²⁹Si-NMR spectroscopy, yielding the following results: n2 > 0, n3 ≥ 0, n4 ≥ 0, n5 ≥ 0, n2+n3+n4+n5 ≥ 1 and n2/(n2+n3+n4+n5) = 0.985.

In addition, the percent change in the weight-average molecular weight measured in the same way as in Example 1 when heated in air at 120°C for one week was found to be 641% and the residual ratio of the product was 90%.

### [Example 3]

10-Undecen-1-ol, 107.93 parts by weight, and 0.15 part by weight of a toluene solution of a sodium bicarbonate-neutralized chloroplatinic acid/vinyl siloxane complex (platinum content, 0.5 wt%) were added to 150 parts by weight of an organohydrogenpolysiloxane of the formula H-(Me₂SiO)₉-SiMe₂H, and the system was stirred under heating at 120°C for 4 hours. Impurities were subsequently removed at 150°C and 1 mmHg, 0.75 part by weight of activated carbon was added and the system was stirred at 20°C for 1 hour, following which the activated carbon was filtered off with a filter (NA-500, from Advantec Co., Ltd.), giving the product.

The resulting product was analyzed by ²⁹Si-NMR spectroscopy, yielding the following results: n2 > 0, n3 ≥ 0, n4 ≥ 0, n5 ≥ 0, n2+n3+n4+n5 ≥ 1 and n2/(n2+n3+n4+n5) = 0.995.

In addition, the percent change in the weight-average molecular weight measured in the same way as in Example 1 when heated at 120°C in air for one week was found to be 175% and the residual ratio of the product was 98%.

### [Example 4]

7-Octen-1-ol, 5.02 parts by weight, and 0.04 part by weight of a toluene solution of a sodium bicarbonate-neutralized chloroplatinic acid/vinyl siloxane complex (platinum content, 0.5 wt%) were added to 40 parts by weight of an organohydrogenpolysiloxane of the formula (Me₃SiO_{1/2})_{0.45}(HMe₂SiO_{1/2})_{2.55}(Me₂SiO_{2/2})_{61.48}(MeSiO_{3/2})_{2.07}, and the system was stirred under heating at 120°C for 4 hours. Impurities were subsequently removed at 150°C and 1 mmHg, 0.2 part by weight of activated carbon was added and the system was stirred at 20°C for 1 hour, following which the activated carbon was filtered off with a filter (NA-500, from Advantec Co., Ltd.), giving the product.

The resulting product was analyzed by ²⁹Si-NMR spectroscopy, yielding the following results: n2 > 0, n3 ≥ 0, n4 ≥ 0, n5 ≥ 0, n2+n3+n4+n5 ≥ 1 and n2/(n2+n3+n4+n5) = 0.992.

In addition, the percent change in the weight-average molecular weight measured in the same way as in Example 1 when heated in air at 120°C for one week was found to be 334% and the residual ratio of the product was 99%.

### [Comparative Example 1]

3-Buten-1-ol, 57.8 parts by weight, and 0.19 part by weight of a toluene solution of a sodium bicarbonate-neutralized chloroplatinic acid/vinyl siloxane complex (platinum content, 0.5 wt%) were added to 190 parts by weight of an organohydrogenpolysiloxane of the formula H-(Me₂SiO)₉-SiMe₂H, and the system was stirred under heating at 80°C for 6 hours. Impurities were subsequently removed at 120°C and 2 mmHg, 0.95 part by weight of activated carbon was added and the system was stirred at 20°C for 1 hour, following which the activated carbon was filtered off with a filter (NA-500, from Advantec Co., Ltd.), giving the product.

The resulting product was analyzed by ²⁹Si-NMR spectroscopy, yielding the following results: n2 > 0, n3 ≥ 0, n4 ≥ 0, n5 ≥ 0, n2+n3+n4+n5 ≥ 1 and n2/(n2+n3+n4+n5) = 0.780.

In addition, the percent change in the weight-average molecular weight measured in the same way as in Example 1 when heated in air at 120°C for one week was found to be 401% and the residual ratio of the product was 83%.

### [Comparative Example 2]

Allyl glycol, 64.65 parts by weight, and 0.15 part by weight of a toluene solution of a sodium bicarbonate-neutralized chloroplatinic acid/vinyl siloxane complex (platinum content, 0.5 wt%) were added to 150 parts by weight of an organohydrogenpolysiloxane of the formula H-(Me₂SiO)₉-SiMe₂H, and the system was stirred under heating at 120°C for 4 hours. Impurities were subsequently removed at 120°C and 1 mmHg, 0.75 part by weight of activated carbon was added and the system was stirred at 20°C for 1 hour, following which the activated carbon was filtered off with a filter (NA-500, from Advantec Co., Ltd.), giving the product.

The resulting product was analyzed by ²⁹Si-NMR spectroscopy, yielding the following results: n2 > 0, n3 ≥ 0, n4 ≥ 0, n5 ≥ 0, n2+n3+n4+n5 ≥ 1 and n2/(n2+n3+n4+n5) = 0.970.

In addition, the percent change in the weight-average molecular weight measured in the same way as in Example 1 when heated in air at 120°C for one week was found to be 588% and the residual ratio of the product was 78%.

### [Comparative Example 3]

Allyl glycol, 3.72 parts by weight, and 0.04 part by weight of a toluene solution of a sodium bicarbonate-neutralized chloroplatinic acid/vinyl siloxane complex (platinum content, 0.5 wt%) were added to 40 parts by weight of an organohydrogenpolysiloxane of the formula (Me₃SiO_{1/2})_{0.45}(HMe₂SiO_{1/2})_{2.55}(Me₂SiO_{2/2})_{61.48}(MeSiO_{3/2})_{2.07}, and the system was stirred under heating at 120°C for 4 hours. Impurities were subsequently removed at 150°C and 1 mmHg, 0.2 part by weight of activated carbon was added and the system was stirred at 20°C for 1 hour, following which the activated carbon was filtered off with a filter (NA-500, from Advantec Co., Ltd.), giving the product.

The resulting product was analyzed by ²⁹Si-NMR spectroscopy, yielding the following results: n2 > 0, n3 ≥ 0, n4 ≥ 0, n5 ≥ 0, n2+n3+n4+n5 ≥ 1 and n2/(n2+n3+n4+n5) = 0.933.

In addition, the percent change in the weight-average molecular weight measured in the same way as in Example 1 when heated in air at 120°C for one week was found to be 4,169% and the residual ratio of the product was 97%.

The results from Examples 1 to 4 and Comparative Examples 1 to 3 are presented in Table 1. As shown in Table 1, each of the hydroxyalkyl group-containing polysiloxanes obtained in Examples 1 to 4 had a small percent change in the weight-average molecular weight before and after heating at 120°C and a high residual ratio of the product, and therefore had a high heat resistance.

**[Table 1]**

| | n2/(n2+n3+n4+n5) | Weight-average molecular weight | | Percent change (%) | Residual ratio (%) |
|---|---|---|---|---|---|
| | | Before heating | After heating | | |
| Example 1 | 0.995 | 1,400 | 3,600 | 257 | 92 |
| Example 2 | 0.985 | 1,390 | 8,910 | 641 | 90 |
| Example 3 | 0.995 | 1,550 | 2,720 | 175 | 98 |
| Example 4 | 0.992 | 14,300 | 47,800 | 334 | 99 |
| Comparative Example 1 | 0.780 | 2,300 | 9,220 | 401 | 83 |
| Comparative Example 2 | 0.970 | 1,290 | 7,590 | 588 | 78 |
| Comparative Example 3 | 0.933 | 13,600 | 567,000 | 4,169 | 97 |

## Claims

1. A hydroxyalkyl group-containing polysiloxane of formula (1) below
(R¹₃SiO_{1/2})ₖ(R¹₂SiO_{2/2})ₚ(R¹SiO_{3/2})_{q}(SiO_{4/2})ᵣ (1)
[wherein each R¹ is independently a group selected from monovalent hydrocarbon groups of 1 to 20 carbon atoms and groups of formulas (2) to (5) below
-CH₂-CH₂-Y-OH or -CH₂-CH₂-Y-O-_{*} (2)
-O-Y-CH=CH₂ (3)
-O-Y'-CH=CH-CH₃ (4)
-O-Y-CH₂-CH₂-_{*} (5)
(wherein Y is a divalent hydrocarbon group of 3 to 20 carbon atoms, Y' is a divalent hydrocarbon group of 2 to 19 carbon atoms, and an asterisk _{*} indicates a point of attachment directly to a silicon atom on a separate hydroxyalkyl group-containing polysiloxane molecule);
letting n2 be the number of groups of formula (2), n3 be the number of groups of formula (3), n4 be the number of groups of formula (4) and n5 be the number of groups of formula (5), n2 > 0, n3 ≥ 0, n4 ≥ 0, n5 ≥ 0, n2+n3+n4+n5 ≥ 1 and 0.97 < n2/(n2+n3+n4+n5) ≤ 1.0;
k, p, q and r are each numbers such that k > 0, p ≥ 0, q ≥ 0 and r ≥ 0, with the proviso that k+p+q ≥ 2; and
the respective siloxane units shown in parentheses above are bonded in any order].

2. The hydroxyalkyl group-containing polysiloxane of claim 1, wherein r in formula (1) is 0.

3. The hydroxyalkyl group-containing polysiloxane of claim 2 which is a hydroxyalkyl group-containing polysiloxane of formula (6) below
(R¹₃SiO_{1/2})ₖ(R²₂SiO_{2/2})ₚ(R²SiO_{3/2})_{q} (6)
(wherein each R² is independently a monovalent hydrocarbon group of 1 to 20 carbon atoms, and R¹, k, p and q are the same as above).

4. A method for preparing the hydroxyalkyl group-containing polysiloxane of any one of claims 1 to 3, which method comprises the step of carrying out a hydrosilylation reaction between an organohydrogenpolysiloxane of formula (7) below
(R³₃SiO_{1/2})ₖ(R³₂SiO_{2/2})ₚ(R³SiO_{3/2})_{q}(SiO_{4/2})ᵣ (7)
(wherein each R³ is independently a hydrogen atom or a monovalent hydrocarbon group of 1 to 20 carbon atoms, with the proviso that one or more R³ is a hydrogen atom; and k, p and q are the same as above) and an alkenyl alcohol of formula (9) below
CH₂=CH-Y-OH (9)
(wherein Y is the same as above) in the presence of a catalyst.
